# EUROPEAN PATENT SPECIFICATION

(11) **EP 1 590 196 B1**
(45) Date of publication and mention of the grant of the patent: **02.11.2011**
(21) Application number: 04704418.5
(22) Date of filing: 22.01.2004
(51) Int. Cl.: A47C 3/027, B60N 2/30, B60N 2/44, B60N 2/46, B60N 2/48, B60N 2/62, B60N 2/64

(54) **AN AUTOMATICALLY ACTUATING ERGONOMIC SUPPORT SYSTEM FOR A FOLD DOWN SEAT**
AUTOMATISCH BETÄTIGBARES ERGONOMISCHES STÜTZSYSTEM FÜR EINEN HERUNTERKLAPPBAREN SITZ
SYSTEME A SUPPORT ERGONOMIQUE ACTIONNE AUTOMATIQUEMENT POUR SIEGE RABATTABLE

(30) Priority: 22.01.2003 US 349525; 10.02.2003 US 361475; 16.09.2003 US 663194
(43) Date of publication of application: 02.11.2005
(73) Proprietor: L & P Property Management Company, South Gate, CA 90280 (US)
(72) Inventor: MCMILLEN, Robert, J., Tecumseh, Ontario N8N 2N4 (CA); COLJA, Robert, R., Windsor, Ontario N9G 2G7 (CA); ZELJKO, Lukic, Windsor, Ontario N9A 7A2 (CA)
(74) Representative: Banzer, Hans-Jörg
(86) International application number: PCT/US2004/001678
(87) International publication number: WO 2004/065162

(56) References cited:
- DE-A1- 19 945 331
- US-A- 4 880 271
- US-A- 5 518 294
- US-A- 5 567 011
- US-A- 5 681 079
- US-A- 5 681 079

## Description

### Background of the Invention

### 1. Field of the Invention

This invention is in the field of an automatically actuating ergonomic support system for automobile seats.

### 2. Related Art

Lumbar supports for automobile seats are a known and popular ergonomic option. Whether lumbar supports are static or variable, their effect depends upon the creation of depth in the portion of the seat positioned to correspond to the passenger's lumbar spine. Head rests, arm rests and thigh supports and side bolsters are also common ergonomic options.

Another popular feature in vehicles having cargo space such as sport utility vehicles, station wagons and the like, is fold down rear seats. Folding these seats down increases the cargo space. For that purpose, it is advantageous that the seat backs for the fold down rear seats be as thin as possible in their down position. Any reduction in the depth of the seat back when it is folded down increases the amount of available cargo space above it.

For passengers sitting in the fold down or "third row" seats, lumbar, thigh, arm and head supports remain a desirable feature. If conventional lumbar, thigh, arm and head supports are installed in fold down rear seats, however, their bulk interferes with the space conservation necessary to maximize cargo space.

Another problem for fold down rear seating is that their installation in a recess in the floor of the cargo space makes the use of conventional levers or hand wheels on the sides of the seats impractical. Therefore, actuating fold down seats is problematic.

Hence, there is a need in the industry for an automatically actuating ergonomic support system for a fold down rear seat that includes lumbar, thigh, arm and head support. These ergonomic supports must have depth when the seat is in its up position and must be as thin as possible when the seat is in its down position. All ergonomic supports need to be actuated into their support position simply by folding the seat up.

A fold down seat according to the preamble of claim 1 is known from DE 199 45 331 A1.

### Summary of the Invention

It is in view of the above problems that the present invention was developed. The present invention is a seat with an automatically actuating ergonomic support for a motor vehicle that includes lumber, thigh, arm and head supports. The lumbar support has depth in the lunbar area of a seat back when the seat is in its up position, and automatically reduces that depth when folded down into its stowed position. The thigh and head supports comprise pivoting bolsters and rests that likewise extend to support the side and front of the thighs, and the head of the passenger when the seat is up, and retract when it is down.

According to the present invention, a fold down seat as defined in claim 1 and a method of actuating an ergonomic support in a fold down seat as defined in claim 32 are provided. The dependent claims define preferred embodiments of the invention.

Further features and advantages of the present invention, as well as the structure and operation of various embodiments of the present invention, are described in detail below with reference to the accompanying drawings.

### Brief Description of the Drawings

The accompanying drawings, which are incorporated in and form a part of the specification, illustrate the embodiments of the present invention and together with the description, serve to explain the principles of the invention. In the drawings:
Figure 1 is an isometric view of the automatic lumbar support as installed in a seat back frame.

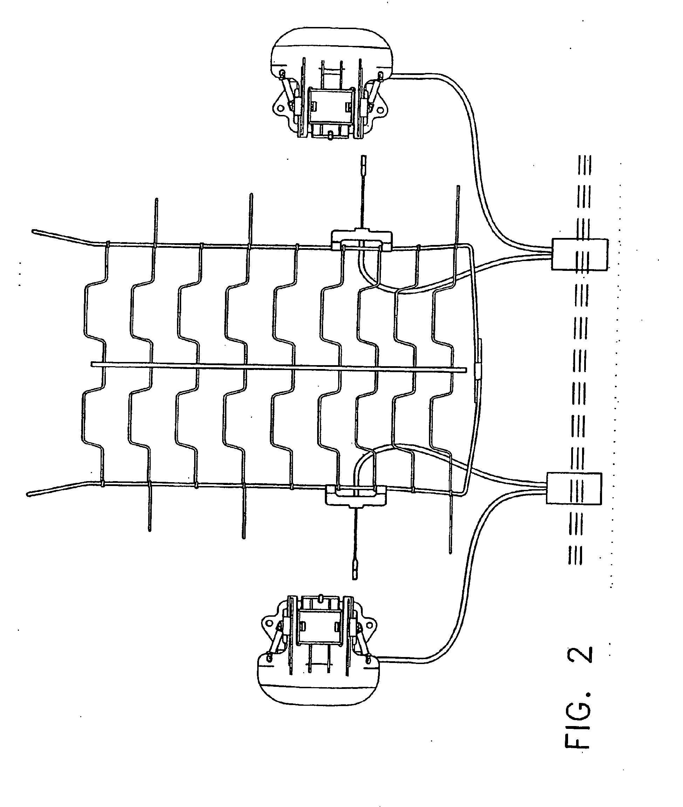

Figure 2 is a schematic front view of the automatic lumbar support.
Figure 3 is a top view of the automatic lumbar support.

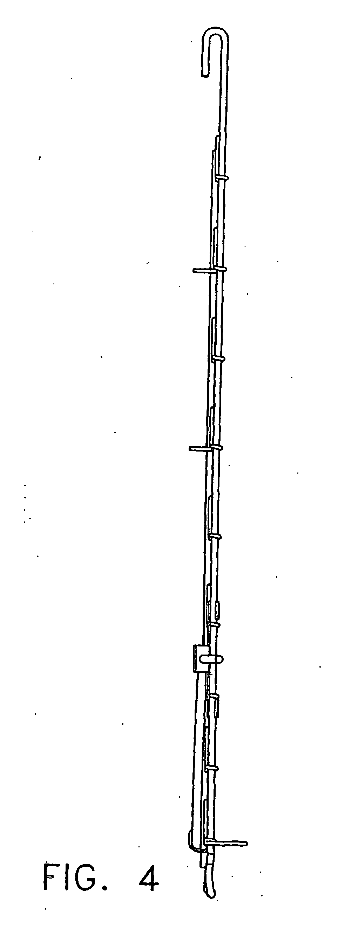

Figure 4 is a side view of the automatic lumbar support.
Figure 5 is a cutaway detail of the cable tension unit.
Figure 6 is an isometric view of the automatic lumbar support as installed in a seat whose seat bottom frame moves on its seat bottom frame base.
Figure 7A is a perspective view of an alternative embodiment.
Figure 7B is a perspective view of an alternative embodiment with a horizontal guide rail.
Figure 8 is a bottom view of an alternative embodiment.
Figure 9 is a bottom view of another alternative embodiment.
Figure 10 is a perspective view of another alternative embodiment.
Figure 11 is a perspective view of another alternative embodiment.
Figure 12 is a bottom view of another alternative embodiment.
Figure 13 is a perspective view of a scissors embodiment.
Figure 14 is a bottom view of the scissors embodiment.
Figure 15 is a perspective view of another scissors embodiment.
Figure 16 is a bottom view of another scissors embodiment.
Figure 17 is an isometric view of the automatic thigh support.
Figure 18 is an isometric view of the automatic head support and arm rest.

### Detailed Description of the Preferred Embodiments

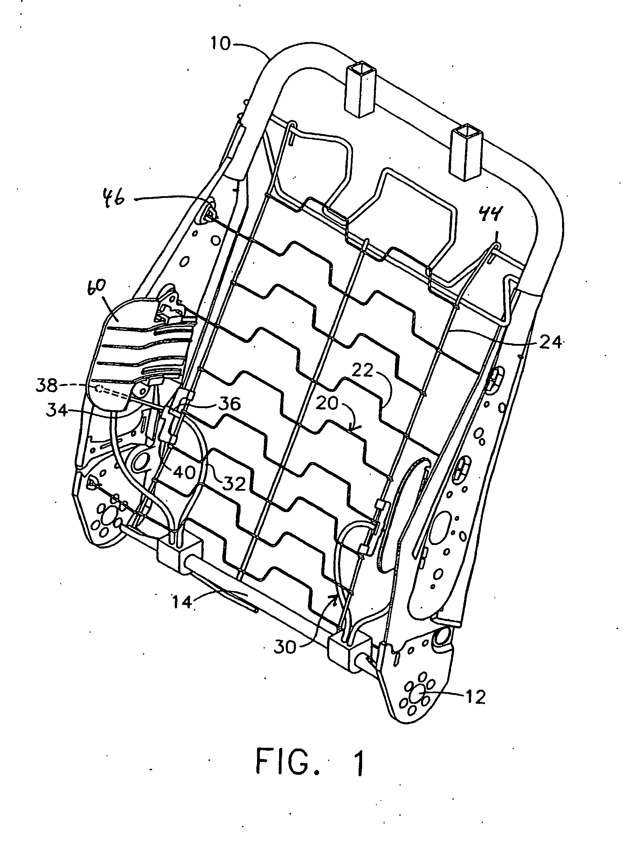

Referring to the accompanying drawings in which like reference numbers indicate like elements, Figure 1 is an isometric view of the automatic lumbar support for a fold down seat back of the present invention. Seat back frame 10 is hingedly connected to a seat bottom frame (not shown) at connection 12. Although other connections between seat backs and seat bottoms are possible, it is common for a hinge connection such as that depicted to include a torsion bar 14. It is also common for a torsion bar 14 to be fixed such that it remains stationary at all positions of the seat back, and does not move when the seat back moves. Lumbar support 20 is mounted on seat₌back frame 10.

It is appreciated by those in the art that many variable types of lumbar supports are known, including many lumbar supports that are actuated by traction cables. Such traction cable actuated lumbar supports include, for example, arching pressure surfaces, such as are disclosed in U.S. Patent Nos. 5,397,164 and 5,913,569, concave tensionable straps, such as disclosed in U.S. Application Serial No. 10/154,636, push paddles, such as are disclosed in U.S. Application Serial No. 09/798,657, and scissors type supports, such as are disclosed in U.S. Application Serial No. 10/315,320. All of the referenced lumbar supports share the common feature of being actuated by traction that is applied with a traction cable.

In the depicted embodiment, lumbar support 20 is an array of flexible wires including horizontal wires 22 and vertical wires 24. The depicted lumbar support wire array 20 is biased toward a substantially flat position. However, its flexibility allows it to be drawn into an arched or convex position having depth. This arched, convex position is achieved by the application of traction with traction cables.

Traction cables are known in the industry. They are sometimes called "Bowden cables." They include a sleeve or conduit with a cable or wire disposed within the sleeve and capable of sliding axially through it. As installed for use, an actuator at one end of the cable holds the sleeve end stationary while pulling the wire end out of the cable and away from the sleeve end. This achieves a corresponding traction or draw on the opposite end of the wire. The opposite end of the sleeve and wire are both connected to a lumbar support, or to a lumbar support combined with a connection to the seat frame. These connections are designed to move the lumbar support into and out of arched, convex or otherwise lumbar supporting positions in response to the tractive force applied to the first end of the traction cable.

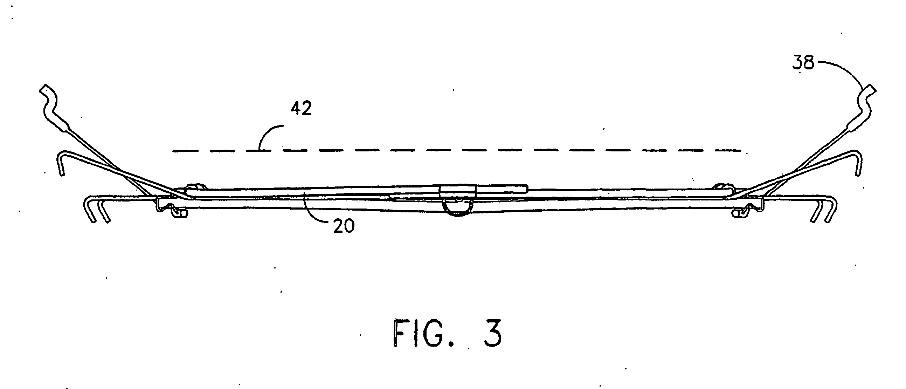

In the depicted embodiment, tractive force is used to actuate the lumbar support via traction cables. Traction cable 30 is comprised of a sleeve (or "conduit") 32 and a wire 34 sliding through the sleeve. The sleeve has an end 36 which is fixedly attached to the lumbar support at bracket 40. Wire 34 extends beyond bracket 40. Wire 34 has a hook 38 at its end by means of which the wire end 38 is attached to a hole or a notch in seat frame 10 that is preconfigured to receive wire end hook 38. In the depicted embodiment, this hole or notch to which the wire end 38 is affixed is positioned forward of the bracket 40 and lumbar support 20. As is best seen in figure 3, this forward positioning of the wire ends 38 creates a depth of space into which lumbar support 20 may be drawn when traction is applied to the traction cable. Schematic line 42 indicates the greatest extent of lumbar support depth achievable by the depicted embodiment. The difference between schematic line 42 in figure 3, and the flat position of lumbar support 20 depicted in figure 3 represents both the degree of lumbar support that will be automatically actuated by the apparatus of the present invention, and also represents the amount of space that will be saved upon automatic flattening of the lumbar support when the seat back is folded down into its stowed position.

As indicated above, vertical wires 24 and horizontal wires 22 are flexible. Of course, seat frame 10 is inflexible. Accordingly, when traction is applied to traction cable 30 wire end 38 will not be able to move. Accordingly, sleeve end 36 will move towards the point at which wire end 38 is attached to frame 10. That is, it will move forward. Through bracket 40, this will pull vertical wire 24 forward as well. In the depicted embodiment, this happens simultaneously on both lateral vertical wires. As is evident from figure 1, the attachment of brackets 40 and wire ends 38 is located at a position corresponding to the lumbar spine of the seat occupant. Accordingly, a band of support will be created corresponding to the level of brackets 40 in the lumbar area. Wire array 20 is also supported at an upper end at mounts 44 and laterally at mounts 46. These mounts are also flexible, but not being at a level corresponding to the brackets 40, are not drawn forward into a lumbar supporting position. In an alternative embodiment, the entire wire array 20 may be replaced by an array having more rigid wires. For example, vertical wires 24 could be completely rigid and horizontal wires 22 more stiff. In such a case, traction on the traction cables would draw the entire array forward creating a different sensation for a seat occupant which may be more desirable under some circumstances.

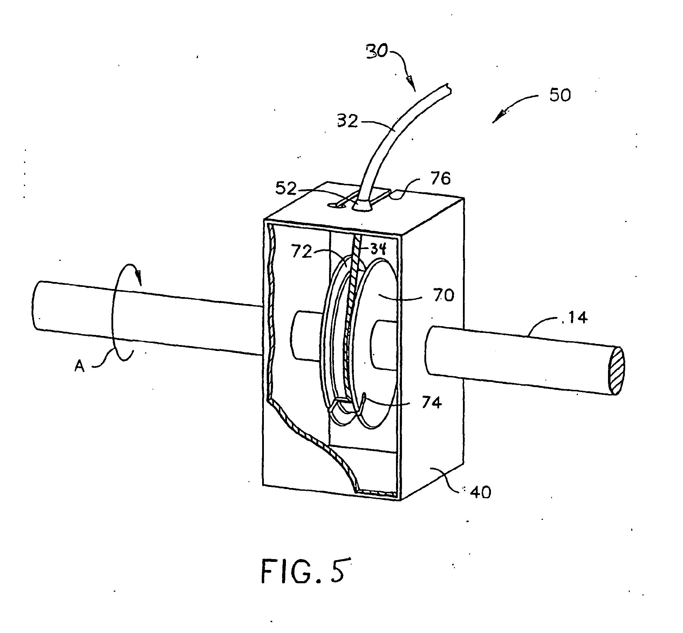

Traction is applied at cable tension unit 50 (See, Fig. 5). In the depicted embodiment, cable tension unit 50 rotates with the seat frame. Horizontal torsion rod 14 remains stationary, and does not rotate. In alternative embodiments also considered to be within the scope of the present invention, the torsion rod may turn with the seat back while the cable tension unit may remain stationary. Relative motion of the tension unit and torsion rod actuate the traction cable as follows. Cable tension unit 50 will have a hole or slot or channel narrowly dimensioned to allow passage therethrough of the traction cable wire 34, but too narrow to allow passage of the traction cable sleeve 32. Within the cable tension unit 50 traction cable wire 34 is attached to torsion rod 14. This attachment may be by any of a wide variety of known means of mechanical attachment, including without limitation, pulleys, levers and the like. When the seat back is folded upwards into its up position, the tension unit and the cable sleeve end 52 mounted on it rotate away from the attachment of the traction cable 34 to the torsion rod 14. The relative motion of cable tension unit 50 and torsion rod 14 will apply traction to draw the traction cable wire 34 out of and through the traction cable sleeve 32. As explained above, this traction at the first end of the traction cable will engage and actuate the lumbar support 20 at the other end of the traction cable, causing it to be drawn by traction into its lumbar supporting position.

Also depicted are bolsters 60. Bolsters are paddles deployed on the sides of the seat for lateral support of the passenger. They are also actuated by traction in a known manner. Like the lumbar support, bolsters 60 have a non supporting flat position and a supporting extended position. The extended position has a greater depth, front to back, than the retracted or flat position. Actuation of the bolsters to move them into their extended position is achieved by connecting the traction cable 30 to the cable tension unit in the same manner as described above for actuation of the lumbar support 20.

The converse operation is folding down the seat back. Moving the seat back down will again move the cable tension unit 50 and the torsion rod 14 relative to each other. The cable tension unit is deployed such that this motion of the seat back downwards will move the cable sleeve end 52 and the attachment of the traction cable wire 34 closer to one another. This relaxes tension on the first end of the traction cable, which in turn reduces the distance between the second traction cable wire end 38 and a traction cable sleeve second end 36. Accordingly, this relaxation of traction on the traction cable allows the lumbar support 20 and bolsters 60 to return to their untensioned, flat position. This return to the flat position is aided by the inherent spring or bias of the lumbar support wires 22 and 24 towards a flat position. It is also aided by the weight of the seat, weight of the cargo and force of the user pushing down on the back of the seat back.

Figure 5 is a cutaway detail of the cable tension unit 50. The cable tension unit is fixedly attached to seat back frame in the depicted embodiment (not shown). Again, the torsion rod 14 could be fixedly attached to the seat back with the cable tension unit being fixedly attached to the seat bottom, as an alternative design. The present invention may be actuated by either one component being attached to the seat back and the other component fixed to the bottom or otherwise fixed to the car frame, so long as the cable tension unit 50 and torsion rod rotate relative to one another.

Pulley 70 is attached to torsion rod 14 inside of the cable tension unit 50. Pulley 70 is fixedly attached to the torsion rod 14 so that it does not move relative to the torsion rod 14. Pulley 70 is designed to pick up and release traction cable wire 34. Accordingly, pulley 70 has a circumferential channel 72 into which traction cable wire 34 may be taken up. Pulley 70 also has a seat 74 into which a bullet at the end of tension cable wire 34 may be inserted upon assembly. In operation, wire bullet seat 74 will hold the wire end in place as tension is applied. A slot 76 is fabricated into a wall of cable tension unit 50. This slot is used in assembly to lead the traction cable wire 34 through the cable tension unit to where it can be seated on pulley 70. Slot 76 also includes a keyhole or a widening which forms another seat for receiving the traction cable sleeve end 52. Hence, the keyhole seat is wide enough to allow passage of the traction cable wire 34 therethrough, but not passage of the traction cable sleeve 32.

In operation, when the seat back frame is rotated up, cable tension unit 50 will also rotate up or in the direction indicated by arrow A in figure 5. In so doing, traction cable sleeve seat and the traction cable sleeve end 52 seated within it will be moved away from where the traction cable wire 34 is anchored to the stationary pulley at 74. This will of course have the effect of drawing the traction cable wire 34 through the traction cable sleeve 32, and consequently applying traction to it. This traction will effect actuation of the lumbar support and, optionally, bolsters at the other end of the traction cable. Accordingly, when the seat back is up, the traction cable is tensioned and the lumbar support is out. When the seat back is folded down, or opposite to arrow A in figure 5, cable tension unit 50 is rotated in a direction that will move the traction cable sleeve end 52 closer to the traction cable wire end anchor 74, allowing the tension on the wire to be reduced and allowing the wire to slide back into the sleeve 32. Accordingly, released tension on the other end the traction cable will allow the lumbar support, and optionally bolsters, to flatten, thereby reducing the thickness of the seat back in its folded down position, increasing cargo space.

It is considered to be within the scope of the present invention that various configurations of cable tension units may be used. For example, a traction cable sleeve mount seated in a portion of a seat back frame is combined with a traction cable wire end bullet seat located in the frame of the seat bottom such that the sleeve end and wire end are separated when the seat is folded up.

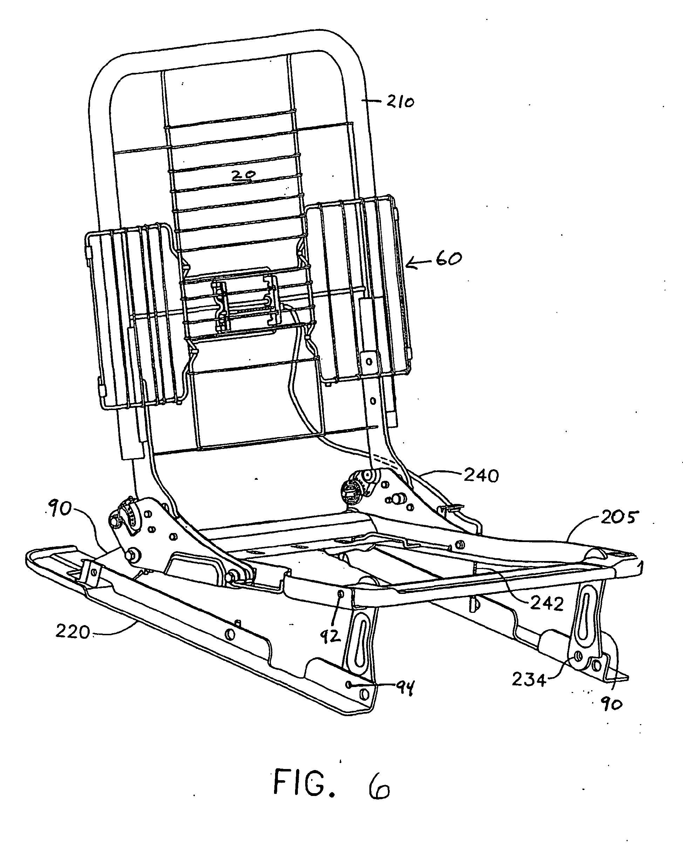

Figure 6 is an isometric view of the automatic lumbar support as installed in a seat whose seat bottom frame 205 moves on its seat bottom base 220. The seat bottom frame has a stowed, flat position and an up position. Four pivoting legs 90 mediate travel between the up and down positions by pivoting on upper pivot pins 92 and lower pivot pins 94.

Traction cable is composed of a sleeve 240 and a wire 242 sliding through the sleeve. One end of the sleeve 240 and wire 242 are connected to a lumbar support. The opposite end of the sleeve and wire are engaged with seat bottom frame 205 and seat bottom base 220, respectively. Alternatively, the opposite end of the sleeve and wire may be engaged with seat bottom base 220 and seat bottom frame 205, respectively. When seat bottom frame 205 moves up from the flat position, the movement applies traction to traction cable such that traction cable moves the lumbar support from a retracted position. This configuration is also considered to be within the scope of the present invention.

### Lateral Bolsters

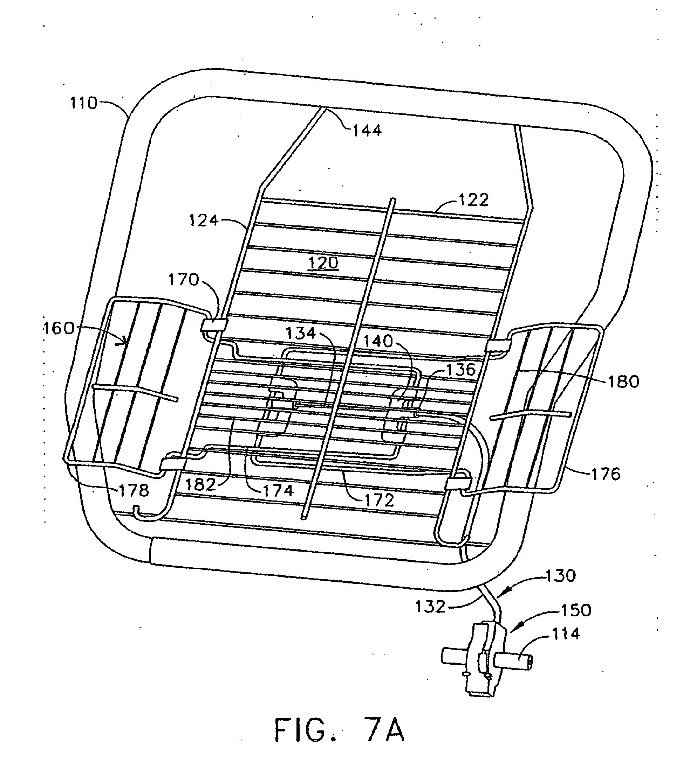

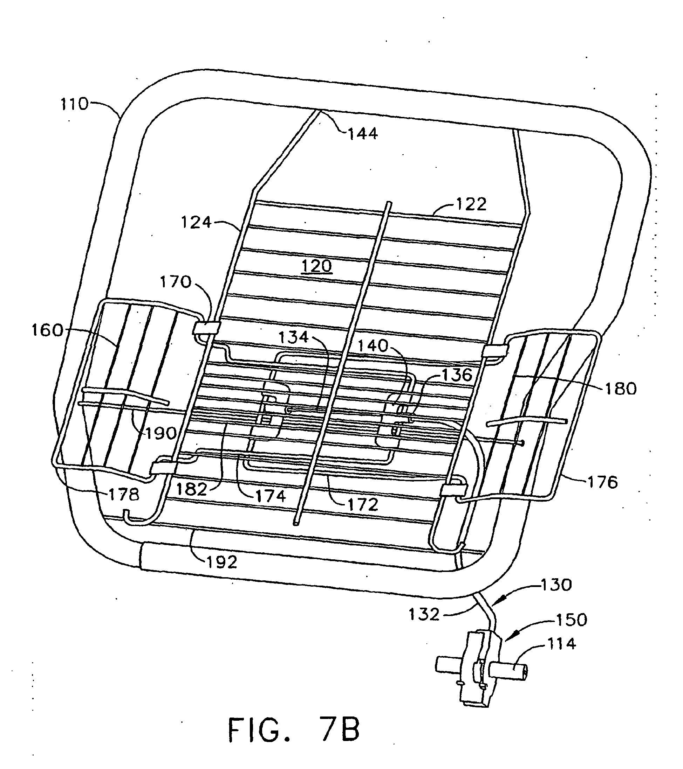

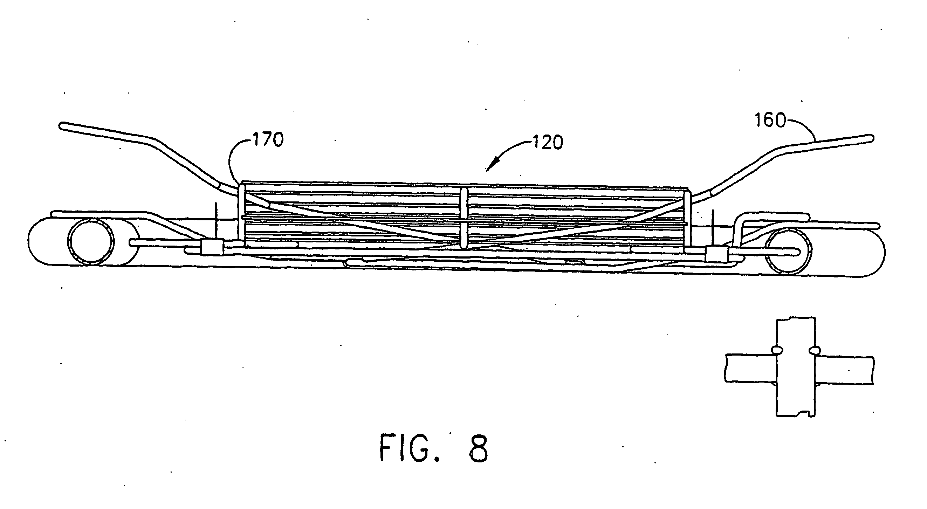

Another alternative embodiment is depicted in figures 7A, 7B and 8. The embodiment incorporates pivoting side bolsters 160. Rigid seat frame 110 has lumbar support wire array 120 mounted on it at mounts 144, which are the ends of vertical wires 124. Vertical wires 124 may be rigid or semi-rigid.

Torsion rod 114 is mounted to and engaged with the overall seat frame in a manner substantially equivalent to that depicted in figure 1 and described in the accompanying text. Substantially equivalent actuator 150 is engaged with torsion rod 114 in order to actuate Bowden cable 130, also in the manner previously described.

Bolsters 160 are mounted with pivoting clamps 170 to vertical rods 124. Each bolster 160 is comprised of a rigid wire having a medial aspect 172 and 174 and a lateral aspects 176, 178. The lateral aspects 176 and 178 comprise pressure surfaces proximate to a seat cushion and, therethrough, the seat occupant and that will support the seat occupants' weight. These lateral portions 176 and 178 may be augmented by supporting wires 180.

Attached to each medial aspect 172 and 174 is a bracket 140. Bowden cable sleeve 132 is attached to a first bracket at 136. Bowden cable wire 134 is attached by a similar mount at opposing bracket 140. Brackets 140 are disposed in an opposing fashion around a vertical midline. Accordingly, when traction is applied to the Bowden traction cable 130, the wire end being drawn into the sleeve end will cause the brackets 140 to approach one another. Traction is actuated by actuator 150 in the manner described above.

Upon application of traction, brackets 140 will be constrained from approaching one another on the same plane because of the restraint of pivoting clamps 170 holding bolster wires 160 from inward movement by their attachment to rigid or semi-rigid vertical wires 124. Pivoting clamps 170 are the only attachment of bolsters 160 to the lumbar support 120. Accordingly, continuing traction applied to brackets 140 will cause the bolster wires 160 to rotate around pivoting clamps 170. The medial aspects 172 and 174 will be drawn out of the plane they occupy in their rest position, and in a direction that is away from the viewer and out of the plane of the page in figure 7A, and towards the bottom of figure 8. This perpendicular or transverse movement of the medial aspects 172 and 174 will, in conjunction with the rotating or pivoting action of brackets 170, cause the lateral aspects 176 and 178 of bolsters 160 to proceed towards the seat occupant, that is out of plane of the page in figure 6 and towards the viewer.

Wire array 120 and the vertical wire 124 that supports it may be rigid. In the embodiment depicted in figure 7A, 7B and 8, the wire array 120 and its vertical rods 124 are flexible. In this case the movement of the lateral bolsters 160 in response to the tension applied by the Bowden cable 130, will also have the effect of arching the wire array 120 outwards at the level at which the bolsters 160 are mounted. This of course is the area corresponding the occupant's lumbar spine. Thereby, actuation of the side bolsters also actuates extension of a lumbar support portion of wire array 120.

An alternative embodiment depicted in figure 7B includes a horizontal guide rod 190. In the depicted embodiment this rod is substantially rigid and is fixedly attached to the seat back frame 110. The purpose of this rod is to provide backing resistance to the movement of the medial aspects 172 and 174 of the lateral bolster wires 160. Rod or band 190 may be engaged with the medial aspects of 172 and 174 with a bracket (not shown), or may simply be disposed to slidingly engage the medial aspects 172 and 174 upon their actuation. There may be more than one rod. Its orientation may vary, so long as it provides backing resistance. In any case, the effect of the additional rod 190 will be to keep the medial aspects 172 and 174 within the plane they occupy in their rest position as they are actuated. This in turn will cause all of the front to back motion of the assembly upon actuation to be directed towards the front, that is out of the page in figure 7B and towards a seat occupant. This effect will multiply the travel of the wire array 120 and the lateral bolsters 160 towards the seat occupant upon actuation.

It may also be observed in the figures 7A and 7B that vertical wires 124 may or may not be attached to a bottom horizontal mounting rod 192. It will be appreciated by those skilled in the art that if the wire array 120 is to be a flexible version, that the lower versions of wires 124 may be attached to a horizontal mounting rod 192 and that actuation of the device will cause flexion of the wire array 120. The connection between vertical rods 124 and horizontal wire 192 may be pivoting, sliding or otherwise, in known fashions, to accommodate the movement of a flexible wire array 120. Alternatively, the bottom portions of vertical wires 124 may be left attached. In this case, the wire array 120 may be less flexible and more rigid. In such an embodiment, the wire array 120 will still travel towards the seat occupant upon actuation of the device; it will simply do so with less flexion of the wire array 120.

Supplemental lateral wires 182 may be added to wire array 120 in the lumbar region.

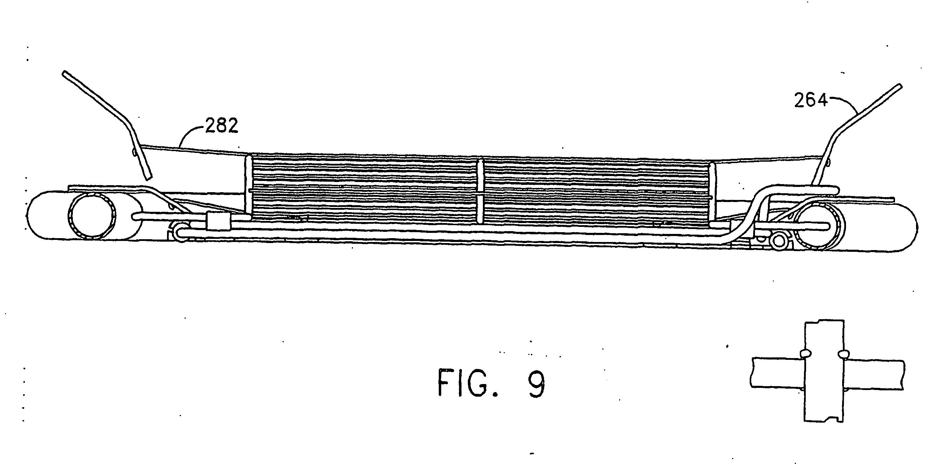

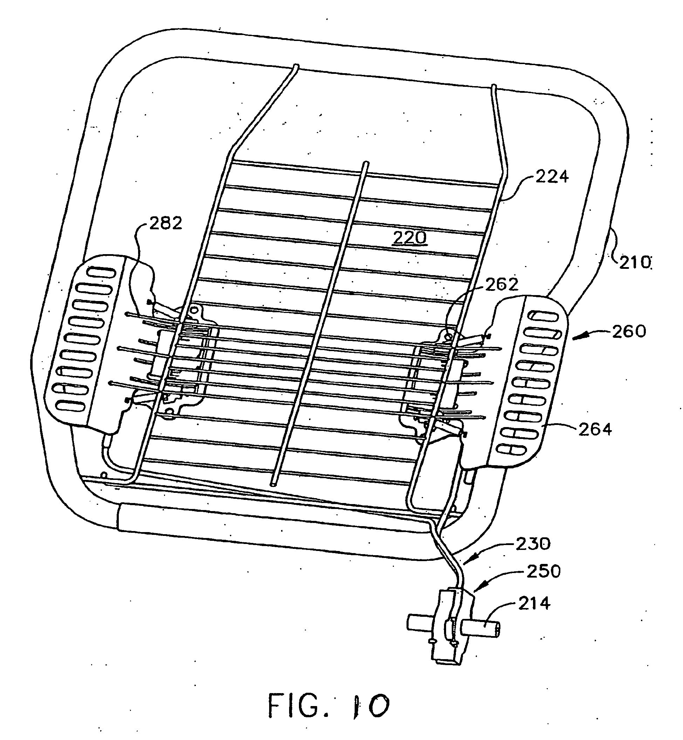

Another alternative embodiment is depicted in figures 9 and 10. In this embodiment lumbar support wire array 220 is either semi-flexible or mounted such that at least a portion of it may move towards a seat occupant.

As before, a seat frame 210 and a torsion bar 214 are cooperatively mounted. An automatic actuator 250 is operatively engaged with torsion bar 214 in order to automatically actuate Bowden traction cable 230. The Bowden traction cable actuates two bolsters 260. A fixed portion of the bolster 262 is attached to seat frame 210 and a moving portion of the bolster 264 moves in and out upon actuation to support a seat occupant, in accordance with known bolster movement apparatuses. The Bowden traction cable 230 has a sleeve and a wire, each being respectively engaged with the fixed portion 262 and moving portion 264 of the bolster 260 in order to move the moving portion 264 when traction is applied, again according to known techniques.

The depicted embodiment also includes lateral wires 282, which are attached at either end to each of the two moving portions 264 of bolsters 260. Lateral wires 282 may be attached to the flexible or semi-flexible lumbar support wire array 220, or may be disposed underneath and behind it. In either case, when the moving portions 264 of bolsters 260 move outwards and towards the seat occupant upon actuation, the lateral wires 282 will also move outwards. As lateral wires 282 move outwards, they will carry with them the flexible or semi-flexible wire array lumbar support 220. In a preferred embodiment, that portion of the wire array 220 that corresponds to the lumbar spine of the seat occupant will be moved. Alternatively, the wire array 220 may be rigid, but movably mounted. ("Outward" means out of the plane of the page and towards the viewer in figure 10, and means towards the top of figure 9.) In this manner, not only side bolster support but also lumbar support is automatically actuated when frame 210 is folded up into a position for seating.

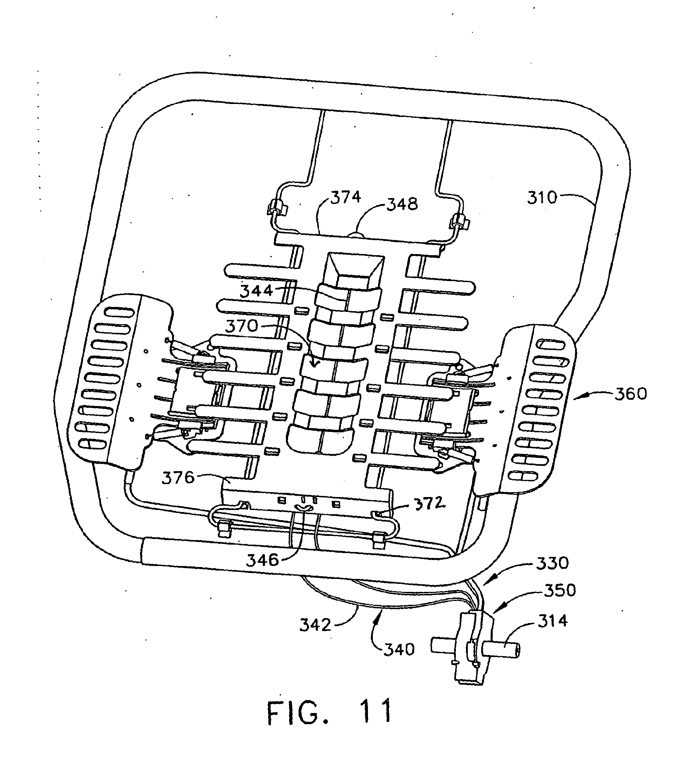

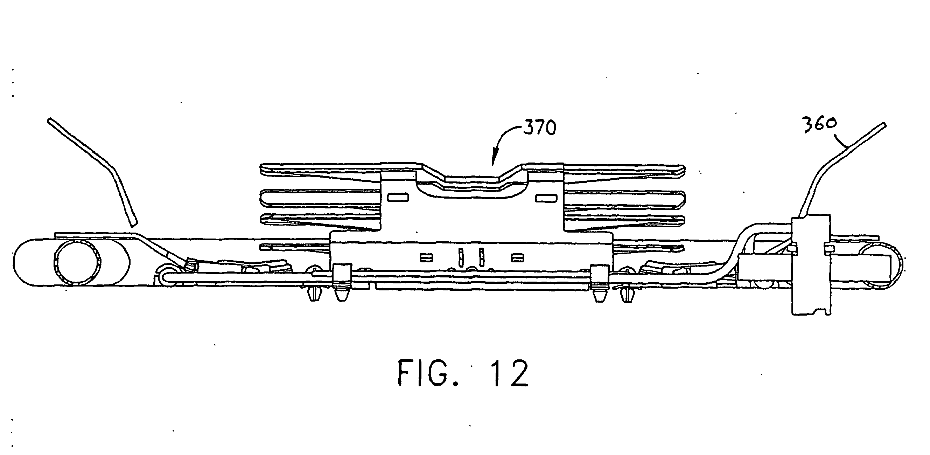

Another embodiment is depicted in figures 11 and 12. This embodiment incorporates an arching pressure surface type of lumbar support sometimes called a "basket," such as those described in U.S. Patent No. 5,397,164 and U.S. Patent Application Serial No. 09/718,263. The basket 370 is flexible. It has 2 or 4 sliding mounts 372 that move along rigid guide rods 324, which are mounted to the seat frame 310. A top portion 374 of the arching pressure surface 370 moves towards a bottom portion 376 of the arching pressure surface 370 by sliding along the rigid guide rod 324, which creates a bow or an arch in the arching pressure surface 370 that extends towards the seat occupant and provides lumbar support. In the present embodiment, torsion rod 314, automatic actuator 350 and a first or first pair of Bowden traction cables 330 are mounted and disposed as herein before described. In the embodiment depicted in figures 11 and 12, a second Bowden traction cable 340 is also actuated automatically by actuator 350. Like the other Bowden traction cables, Bowden cable 340 has a sleeve 342 which is mounted at 346 to either the top or bottom portion of the arching pressure surface 370. Bowden traction cable 340 also has a wire 344 which is mounted with wire hook 348 to the other of the top or bottom portions of the arching pressure surface 370. Accordingly, when traction is automatically applied by actuator 350, hook 348 is drawn by wire 344 towards sleeve mount 346, thereby drawings the top 374 and bottom 376 portions of the arching pressure surface 370 towards one another, creating a lumbar supporting arch.

The arching pressure surface may be mounted alone, or in conjunction with bolsters (360).

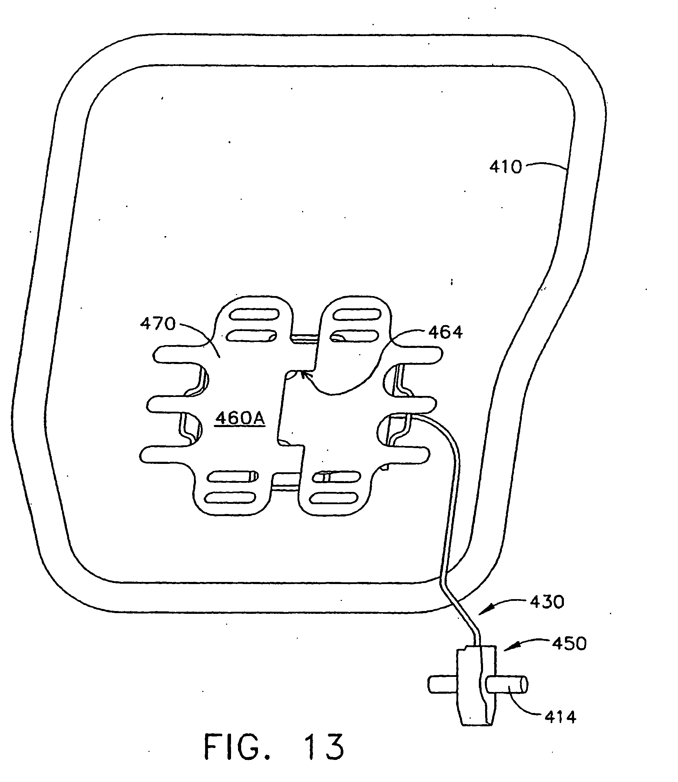

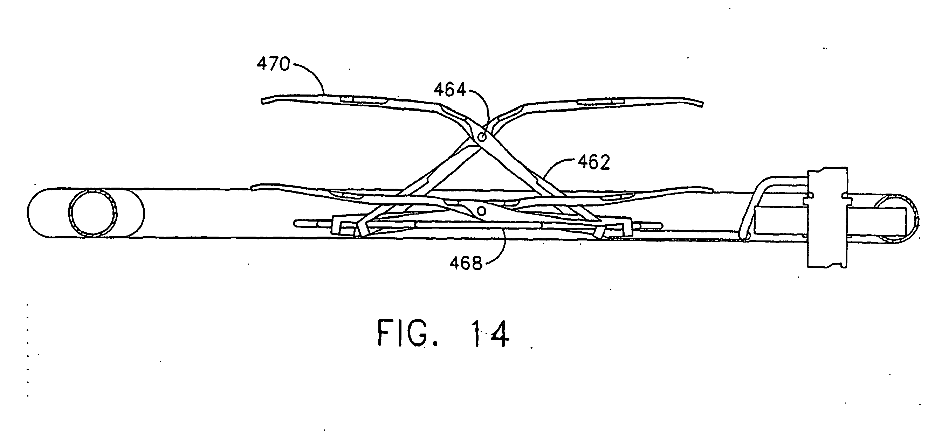

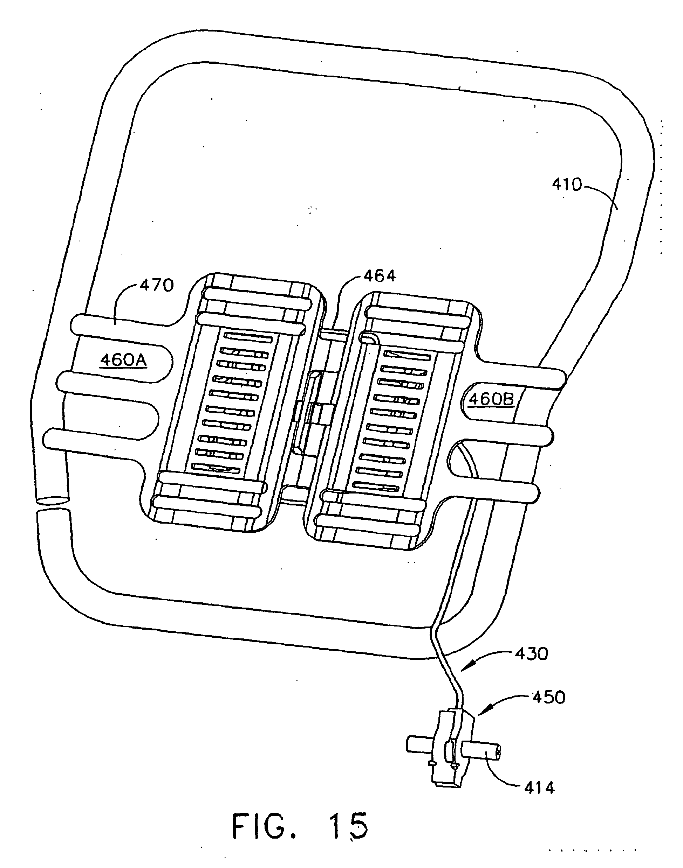

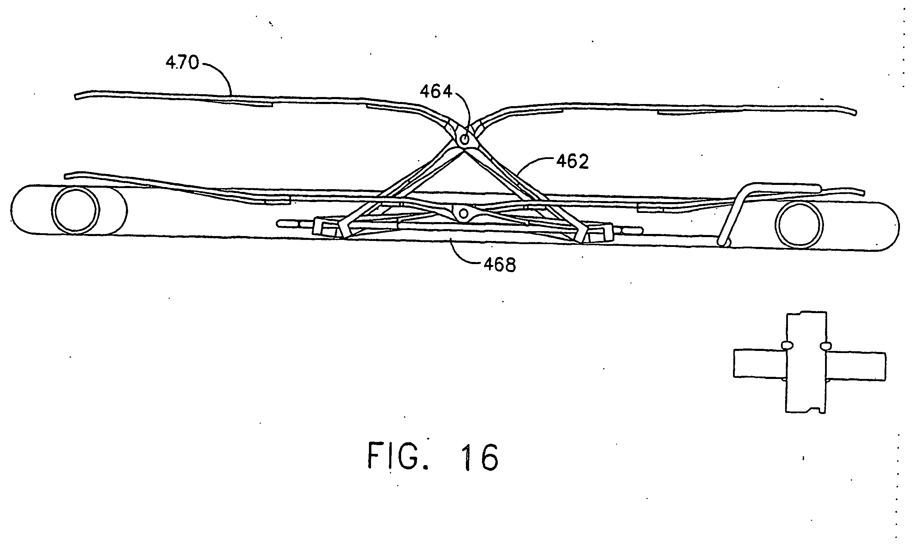

Figures 13 and, 14 show a first version and figures 15 and 16 show a second version of another embodiment of the present invention. These four figures demonstrate a "scissors" embodiment of the fold down seat automatic actuation system of the present invention. U.S. Patent Application Serial No. 10/315,320 describes the functioning of scissors lumbar supports upon actuation. Conventional known mounting apparatuses have been omitted from figures 13, 14, 15 and 16 for clarity. As previously, seat frame 410 and torsion rod 414 are interoperatively mounted with the automatic actuator 450 that applies traction to Bowden traction cable 430. The functioning of a scissors lumbar support involves attaching a Bowden cable wire end and a Bowden cable sleeve end to extension lever arms 462.

Scissors lumbar supports are comprised of two wings, 460A and 460B, that are joined together at a hinge 464. The mounting of scissors lumbar support wings 460 is at the ends of rearward lever arms 462, which slide across the mounts upon traction being applied to them by the Bowden cable sleeve end and Bowden cable wire end. This drawing together of the ends of lever arms 462 causes hinge 464 to ride outwards, which is out of the plane of the page and towards the viewer in figures 13 and 15, and towards the top of figures 14 and 16, and which is towards the seat occupant for lumbar support. Opposite the lever arm extensions 462 on each scissors lumbar support wing 460 is support panel 470. Upon actuation, support panels 470 extend towards the seat occupant with pressure in order to provide lumbar support. They are preferably flexible.

### A Thigh Support Embodiment

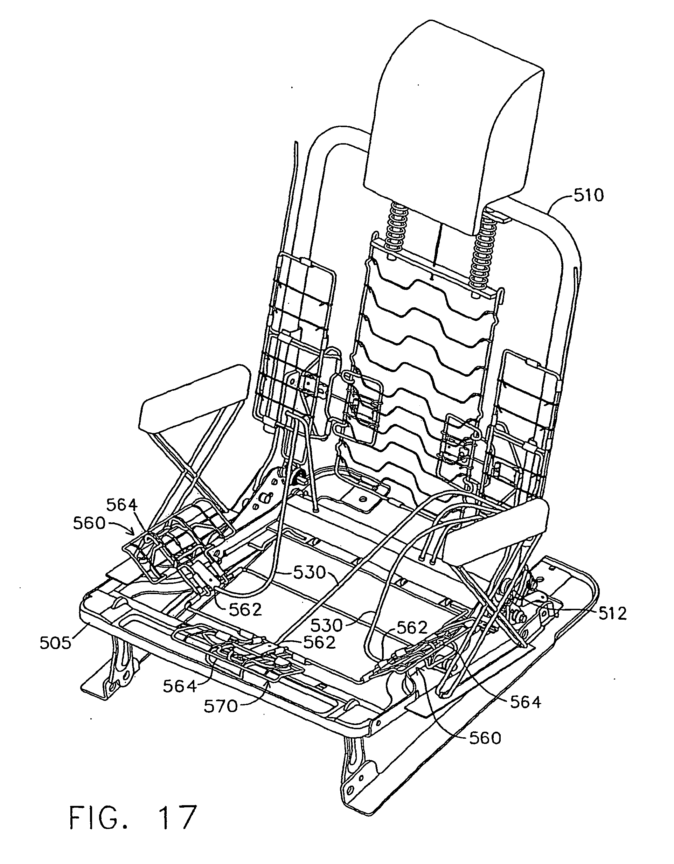

Figure 17 is an isometric view of the automatic thigh support for a fold down seat of the present invention. The depicted embodiment incorporates two side thigh bolsters 560 that pivot around two side members of a seat bottom frame 505, and a front thigh bolster 570 that pivots around a front member of seat bottom frame 505. Like the lumbar support, bolsters 560 and 570 have a non supporting flat position and a supporting extended position. As described in the lumbar support embodiments, a seat back frame 510 and a torsion bar are cooperatively mounted. Seat back frame 510 is hingedly connected to seat bottom frame 505 at connection 512. Torsion bar is mounted to and engaged with the overall seat frame in a manner substantially equivalent to that depicted in figure 1. An automatic actuator is operatively engaged with torsion bar in order to automatically actuate Bowden traction cable 530, also in the manner previously described.

In order to actuate Bowden traction cable 530 when the seat back is folded up, the traction cable 530 is attached to the bolsters 560 and 570 through seat back frame 510. A traction cable sleeve mount is seated in a portion of seat back frame 510, and at that portion the sleeve has an end. A traction cable wire is attached to its end bullet seat located in automatic actuator engaged with torsion bar such that the sleeve end and wire end are separated when the seat is folded up. A movement of seat back frame 510 from a stowed position applies traction to the traction cable such that the traction cable moves the bolsters 560 and 570. As described above for actuation of the lumbar support, alternatively, a sleeve end may be engaged with seat bottom frame 505, and a wire end may be engaged with seat back frame 510. This alternative configuration also has the sleeve end and wire end separated when the seat is folded up, and a movement of seat back frame 510 from the stowed position applies traction to the traction cable such that the traction cable moves the bolsters 560 and 570.

Each Bowden traction cable actuates its corresponding thigh bolster. Bolsters are paddles deployed on the sides and front of the seat bottom for lateral and front thigh supports of a seat occupant. A fixed portion of the bolster 562 is attached to seat bottom frame 505 and a moving portion of the bolster 564 moves in and out upon actuation to support the thighs of the seat occupant, in accordance with the bolster movements. The sleeve and wire are respectively engaged with the fixed portion 562 and moving portion 564 of the bolsters 560 and 570 in order to move the moving portion 564 when traction is applied, again according to the techniques described above for actuation of the lumbar support. In this manner, side and front thigh supports are automatically actuated when seat back frame 510 is folded up into a position for seating.

### A Head Support Embodiment

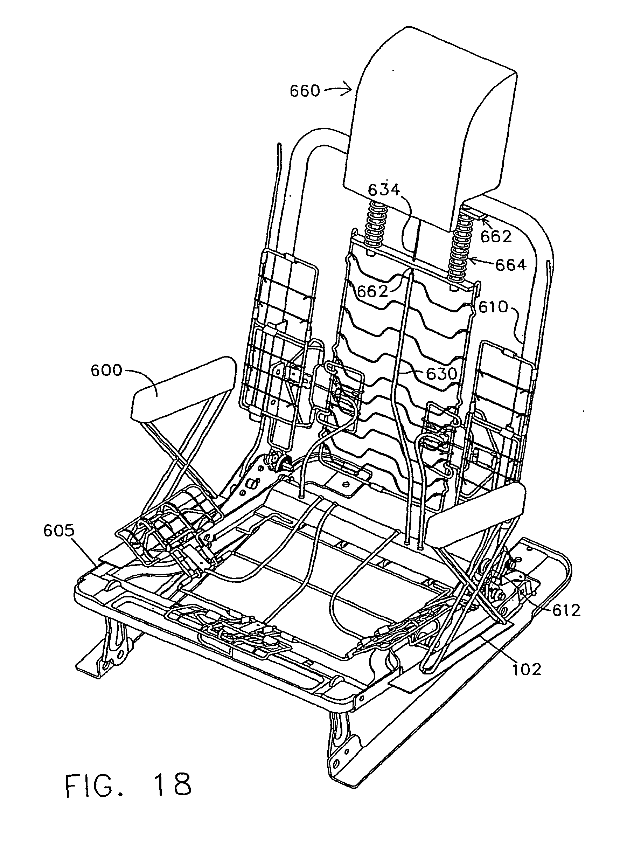

Figure 18 is an isometric view of the automatic head support for a fold down seat of the present invention. A preferred embodiment incorporates a head rest 660 that may pivot around a horizontal member of a seat back frame 610. As described in the lumbar support embodiments, seat back frame 610 and a torsion bar are cooperatively mounted. Seat back frame 610 is hingedly connected to a seat bottom frame 605 at connection 612. Torsion bar is mounted to and engaged with the overall seat frame in a manner substantially equivalent to that depicted in figure 1. A cable tension unit is operatively engaged with torsion bar in order to automatically actuate Bowden traction cable 630, also in the manner previously described.

The Bowden traction cable actuates head rest 660. Actuation of head rest 660 to move it into its supporting position is achieved by connecting the traction cable 630 to the cable tension unit in the same manner as described above for actuation of the lumbar support. The head rest is capable of adjusting its height upwards and downwards. A fixed portion of the head rest 662 is attached to seat back frame 610. A moving portion of the head rest 664 extends up and down or rotates forwards and backwards upon actuation to support the head of a seat occupant, in accordance with known bolster movement apparatuses. The Bowden traction cable 630 has a sleeve 632 and a wire 634, each being respectively engaged with the fixed portion 662 and moving portion 664 of the head rest 660 in order to move the moving portion 664 when traction is applied, again according to the techniques described above for actuation of the lumbar support. In the depicted embodiment, springs extend the head rest on opening, and traction is actuated by the seat being folded down, so that the applied traction retracts the headrest.

The moving portion of the head rest may move forward and toward the back of the seat occupant's head upon actuation. In this manner, the head support is automatically actuated when seat back frame 610 is folded up into a position for seating.

### Arm Rest Embodiment

The self presenting techniques of the present invention may be applied to self presenting arm rests as well. Arm rest 600 may be hingedly engaged with seat back frame 610 and actuated by Bowden cable 102 in the manner previously described for actuation of Bowden cables applying self presenting traction to the other ergonomic supports herein described.

In view of the foregoing, it will be seen that the several advantages of the invention are achieved and attained.

The scope of the present invention should not be limited by any of the above-described exemplary embodiments, but should be defined only in accordance with the following claims appended hereto.

## Claims

1. A fold down seat, comprising
a seat bottom frame (205) operatively engaged with a seat back frame (10; 110), said seat bottom frame (205) and said seat back frame (10; 110) being movable between a stowed position and an open position;
an automatically actuating ergonomic support (20; 60; 460), said ergonomic support (20; 60; 460) being mounted on one of said seat bottom frame (205) or said seat back frame (10; 110); and
at least one traction cable (30; 130; 230; 330; 430) having a sleeve (32; 132) and a wire (34; 134) disposed to slide axially through said sleeve (32; 132), a first sleeve end (36; 136) and a first wire end (38) being operatively engaged with said ergonomic support (20; 60; 460), a second sleeve end (52) being operatively engaged with one of said seat bottom frame (205) or said seat back frame (10; 110), and a second wire end (74) being operatively engaged with the other of said seat bottom frame (205) or said seat back frame (10; 110),
**characterized in that**
said ergonomic support (20; 60; 460) has a flat position and at least one extended position, wherein said flat position corresponds with the stowed position of the seat and said extended position corresponds with the open position of the seat, and wherein said ergonomic support in the extended position has a greater depth of space than in said flat position, whereby movement of said seat back frame (10; 110) or said seat bottom frame (205) from said stowed position applies traction to said at least one traction cable (30; 130; 230; 330; 430) such that said at least one traction cable (30; 130; 230; 330; 430) moves said ergonomic support (20; 60; 460) from said flat position; and
said second sleeve end (52) is mounted directly onto one of said seat bottom frame (205) or said seat back frame (10; 110), and said second wire end (74) is mounted directly onto the other of said seat bottom frame (205) or said seat back frame (10; 110).

2. The fold down seat of claim 1 further comprising an actuator operatively engaged with a fixed portion of one of said seat back frame (10; 110) or said seat bottom frame (205) and operatively engaged with a moving portion of the other one of said seat back frame (10; 110) or said seat bottom frame (205), such that raising said seat back frame (10; 110) operates said actuator to actuate said at least one traction cable.

3. The fold down seat of claim 2 wherein said actuator further comprises:
a fixed member (50)
a rotating member (70) attached to said seat back frame (10; 110), said rotating member (70) being operatively engaged with said fixed member (50) such that said rotating member (70) moves relative to said fixed member (50) when said seat back frame (10;'110) is folded up;
said second sleeve end (52) of said traction cable (30) being attached to one of said fixed member (50) or said rotating member (70);
said second wire end (74) of said traction cable (30) being attached to the other of said fixed member (50) or said rotating member (70);
said attachments of said second sleeve end (52) and said second wire end (74) applying traction to said wire (34) through said sleeve (32) when said seat back frame (10; 110) is moved.

4. The fold down seat of claim 3, wherein said attachment of said second wire end (74) to the other of said fixed member (50) or said rotating member (70) is via a pulley (70).

5. The fold down seat of claim 3 or 4, wherein said rotating member is a cable tension unit (50) and said fixed member is a torsion rod (14).

6. The fold down seat of claim 3 or 4, wherein said fixed member is a cable tension unit and said rotating member is a torsion rod.

7. The fold down seat of any one of claims 3-6, wherein said rotating member is a frame of said seat back.

8. The fold down seat of any one of claims 3-7, wherein said fixed member is a frame of a bottom of said seat.

9. The fold down seat of any one of claims 1-8, wherein said second sleeve end (52) is attached to a pulley housing (50), said pulley housing (50) being adapted to engage one of said seat bottom frame (205) or said seat back frame (10; 110), and said second wire end (74) is attached to a pulley (70), said pulley (70) being operatively mounted in said pulley housing (50) and said pulley (70) being adapted to engage the other of said seat bottom frame (205) or said seat back frame (10, 210), whereby movement of said seat back frame (10, 210) from said stowed position applies traction to said traction cable (30) such that said traction cable (30) moves said ergonomic support (20; 60; 460) from said flat position.

10. The fold down seat of any one of claims 1-9 further comprising:
a seat bottom base (220);
at least one support member (90) in elevating linkage with said seat bottom base (220) and said seat bottom frame (205), said at least one support member (90) mediating travel of said seat bottom frame (205) between a stowed position and an elevated position;
said second sleeve end (52) being engaged with one of said seat bottom base (220) or said seat bottom frame (205), and said second wire end (74) being engaged with the other of said seat bottom base (220) or said seat bottom frame (205);
whereby movement of seat bottom frame (205) from said stowed position applies traction to said traction cable (30; 130; 230; 330; 430) such that said traction cable (30; 130; 230; 330; 430) moves said ergonomic support (20; 60; 460) from said flat position.

11. The fold down seat of claim 10 wherein said support member (90) is comprised of at least two pivoting legs, each of said legs being hingedly connected to each of said seat bottom base (220) and said seat bottom frame (205).

12. The fold down seat of any one of claims 1-11, wherein said ergonomic support is any one of a lumbar support (30; 370; 470) a thigh support (560; 570), a bolster (60; 160; 260; 360), and an arm rest (600).

13. The fold down seat of any one of claims 1-12, wherein said ergonomic support is comprised of at least two bolsters (60; 160; 260; 360).

14. The fold down seat of claim 13, wherein said at least two bolsters (160) pivot upon extension around at least one vertical member (124) of said seat back frame (110).

15. The fold down seat of claim 13 or 14, further comprising an archable pressure surface (370) in addition to said at least two bolsters (360).

16. The fold down seat of any one of claims 13-15, further comprising lateral wires (182) attached to each of said at least two bolsters (160).

17. The fold down seat of claim 16, wherein said lateral wires (182) are operatively engaged with a flexible wire array (120) such that upon said extension of said bolsters (160), a portion of said flexible wire array (120) is extended.

18. The fold down seat of any one of claims 1-17, further comprising a flexible wire array (20; 120) mountable on said seat back frame (10; 110).

19. The fold down seat of claim 16 and 18, wherein said flexible wire array (20; 120) is disposed between said lateral wires (182) and a seat occupant.

20. The fold down seat of claim 18 or 19, wherein a portion of said flexible wire array (20; 120) substantially corresponds to the lumbar spine of a seat occupant.

21. The fold down seat of any one of claims 1-20, wherein said ergonomic support is an archable pressure surface (370).

22. The fold down seat of any one of claims 1-21, wherein said ergonomic support is a scissors lumbar support (460, 470).

23. The fold down seat of any one of claims 1-22, further comprising a thigh support, said thigh support being any one of a front thigh bolster (570) and a side thigh bolster (560).

24. The fold down seat of claim 23, wherein said front thigh bolster (560) pivots upon extension around a front member of said seat bottom frame (505).

25. The fold down seat of any one of claims 1-24, wherein at least two side thigh bolsters (560) pivot upon extension around two side members of said seat bottom frame (505).

26. The fold down seat of any one of claims 1-25, wherein said ergonomic support device (20; 60; 460) is a substantially rigid wire array.

27. The fold down seat of any one of claims 1-26, wherein said ergonomic support device is selected from the group consisting of a push paddle, a scissors (460, 470), an arching pressure surface (370) or a concave strap.

28. The fold down seat of any one of claims 1-27, wherein said ergonomic support is at least one arm rest (600).

29. The fold down seat of any one of claims 1-28, wherein said ergonomic support (20; 60; 460) is combined with a user variable lumbar support.

30. The fold down seat of any one of claims 1-29 further comprising an arm rest (600) hingedly attached to said seat back frame (610) and operatively engaged with a second traction cable (102) disposed to automatically extend said arm rest (600) upon said seat back frame (610) being opened.

31. The fold down seat of any one of the preceding claims further comprising a horizontal backing rod (190).

32. A method of actuating an ergonomic support in a fold down seat comprising:
mounting an ergonomic support (20; 60; 460) on one of a seat back frame (10; 110) or a seat bottom frame (205), wherein said ergonomic support (20; 60; 460) comprises a flattened position and an extended position having a greater depth of space than said flattened position, said flattened position and said extended position respectively corresponding with a folded position and an unfolded position of said seat;
engaging said ergonomic support (20; 60; 460) with a first end (36; 136) of a traction cable sleeve (32; 132) and a first end (38) of a traction cable wire (34; 134);
attaching a second end (52) of said traction cable sleeve (32; 132) to one of said seat bottom frame (205) or said seat back frame (10; 110);
attaching a second end (74) of said traction cable wire (34; 134) to the other of said seat bottom frame (205) or said seat back frame (10; 110); and
moving said seat between said folded position and said unfolded position.

## Patentansprüche

1. Umklappbarer Sitz, umfassend
einen Sitzflächenrahmen (205), welcher sich funktionsfähig mit einem Sitzlehnenrahmen (10; 110) in Eingriff befindet, wobei der Sitzflächenrahmen (205) und der Sitzlehnenrahmen (10; 110) zwischen einer verstauten Position und einer offenen Position beweglich sind;
eine automatisch angetriebene ergonomische Stütze (20; 60; 460), wobei die ergonomische Stütze (20; 60; 460) an einem von dem Sitzflächenrahmen (205) oder dem Sitzlehnenrahmen (10; 110) angebracht ist; und
mindestens ein Zugkabel (30; 130; 230; 330; 430) mit einer Hülle (32; 132) und einem Draht (34; 134), welcher angeordnet ist, um axial durch die Hülle (32; 132) zu gleiten, wobei sich ein erstes Hüllenende (36; 136) und ein erstes Drahtende (38) funktionsfähig mit der ergonomischen Stütze (20; 60; 460) in Eingriff befinden, wobei sich ein zweites Hüllenende (52) funktionsfähig mit einem von dem Sitzflächenrahmen (205) oder dem Sitzlehnenrahmen (10; 110) in Eingriff befindet, und wobei sich ein zweites Drahtende (74) funktionsfähig mit dem anderen von dem Sitzflächenrahmen (205) oder dem Sitzlehnenrahmen (10; 110) in Eingriff befindet,
**dadurch gekennzeichnet,**
**dass** die ergonomische Stütze (20; 60; 460) eine flache Position und mindestens eine ausgedehnte Position aufweist, wobei die flache Position mit der verstauten Position des Sitzes übereinstimmt und die ausgedehnte Position mit der offenen Position des Sitzes übereinstimmt, und wobei die ergonomische Stütze in der ausgedehnten Position eine größere Raumtiefe als in der flachen Position aufweist, wobei eine Bewegung des Sitzlehnenrahmens (10; 110) oder des Sitzflächenrahmens (205) aus der verstauten Position einen Zug auf das mindestens eine Zugkabel (30; 130; 230; 330; 430) derart ausübt, dass das mindestens eine Zugkabel (30; 130; 230; 330; 430) die ergonomische Stütze (20; 60; 460) aus der flachen Position bewegt; und
**dass** das zweite Hüllenende (52) direkt an einem von dem Sitzflächenrahmen (205) oder dem Sitzlehnenrahmen (10; 110) angebracht ist und das zweite Drahtende (74) direkt an dem anderen von dem Sitzflächenrahmen (205) oder dem Sitzlehnenrahmen (10; 110) angebracht ist.

2. Umklappbarer Sitz nach Anspruch 1, ferner umfassend ein Bedienelement, welches sich funktionsfähig mit einem festen Abschnitt von einem von dem Sitzlehnenrahmen (10; 110) oder dem Sitzflächenrahmen (205) in Eingriff befindet und welches sich funktionsfähig mit einem beweglichen Abschnitt des anderen von dem Sitzlehnenrahmen (10; 110) oder dem Sitzflächenrahmen (205) in Eingriff befindet, so dass ein Anheben des Sitzlehnenrahmens (10; 110) das Bedienelement betätigt, um das mindestens eine Zugkabel zu betätigen.

3. Umklappbarer Sitz nach Anspruch 2, wobei das Bedienelement ferner umfasst:
ein festes Element (50);
ein Drehelement (70), welches an dem Sitzlehnenrahmen (10; 110) angebracht ist, wobei sich das Drehelement (70) funktionsfähig mit dem festen Element (50) derart in Eingriff befindet, dass sich das Drehelement (70) relativ zu dem festen Element (50) bewegt, wenn der Sitzlehnenrahmen (10; 110) hochgeklappt wird;
wobei das zweite Hüllenende (52) des Zugkabels (30) an einem von dem festen Element (50) oder dem Drehelement (70) angebracht ist;
wobei das zweite Drahtende (74) des Zugkabels (30) an dem anderen von dem festen Element (50) oder dem Drehelement (70) angebracht ist;
wobei die Anbringungen des zweiten Hüllenendes (52) und des zweiten Drahtendes (74) einen Zug auf den Draht (34) durch die Hülle (32) aufbringen, wenn der Sitzlehnenrahmen (10; 110) bewegt wird.

4. Umklappbarer Sitz nach Anspruch 3, wobei die Anbringung des zweiten Drahtendes (74) an dem anderen von dem festen Element (50) oder dem Drehelement (70) über eine Rolle (70) ausgeführt ist.

5. Umklappbarer Sitz nach Anspruch 3 oder 4, wobei das Drehelement eine Kabelzugeinheit (50) ist und das feste Element ein Torsionsstab (14) ist.

6. Umklappbarer Sitz nach Anspruch 3 oder 4, wobei das feste Element eine Kabelzugeinheit ist und das Drehelement ein Torsionsstab ist.

7. Umklappbarer Sitz nach einem der Ansprüche 3-6, wobei das Drehelement ein Rahmen der Sitzlehne ist.

8. Umklappbarer Sitz nach einem der Ansprüche 3-7, wobei das feste Element ein Rahmen einer Sitzfläche des Sitzes ist.

9. Umklappbarer Sitz nach einem der Ansprüche 1-8, wobei das zweite Hüllenende (52) an einem Rollengehäuse (50) angebracht ist, wobei das Rollengehäuse (50) ausgestaltet ist, sich mit einem von dem Sitzflächenrahmen (205) oder dem Sitzlehnenrahmen (10; 110) in Eingriff zu befinden, und wobei das zweite Drahtende (74) an einer Rolle (70) angebracht ist, wobei die Rolle (70) funktionsfähig in dem Rollengehäuse (50) angebracht ist und wobei die Rolle (70) ausgestaltet ist, sich mit dem anderen von dem Sitzflächenrahmen (205) oder dem Sitzlehnenrahmen (10, 210) in Eingriff zu befinden, wobei eine Bewegung des Sitzlehnenrahmens (10, 210) aus der verstauten Position einen Zug auf das Zugkabel (30) derart ausübt, dass das Zugkabel (30) die ergonomische Stütze (20; 60; 460) aus der flachen Position bewegt.

10. Umklappbarer Sitz nach einem der Ansprüche 1-9, ferner umfassend:
eine Sitzflächenbasis (220);
mindestens ein Halteelement (90) in einer ansteigenden Verbindung mit der Sitzflächenbasis (220) und dem Sitzflächenrahmen (205), wobei das mindestens eine Halteelement (90) eine Bewegung des Sitzflächenrahmens (205) zwischen einer verstauten Position und einer erhöhten Position vermittelt;
wobei sich das zweite Hüllenende (52) mit einem von der Sitzflächenbasis (220) oder dem Sitzflächenrahmen (205) in Eingriff befindet, und wobei sich das zweite Drahtende (74) mit dem anderen von der Sitzflächenbasis (220) oder dem Sitzflächenrahmen (205) in Eingriff befindet;
wobei eine Bewegung des Sitzflächenrahmens (205) aus der verstauten Position einen Zug auf das Zugkabel (30; 130; 230; 330; 430) derart ausübt, dass das Zugkabel (30; 130; 230; 330; 430) die ergonomische Stütze (20; 60; 460) aus der flachen Position bewegt.

11. Umklappbarer Sitz nach Anspruch 10, wobei das Halteelement (90) aus mindestens zwei Schwenkbeinen besteht, wobei jedes der Schwenkbeine gelenkig mit jedem von der Sitzflächenbasis (220) und dem Sitzflächenrahmen (205) verbunden ist.

12. Umklappbarer Sitz nach einem der Ansprüche 1-11, wobei die ergonomische Stütze eine Lordosenstütze (30; 370; 470), eine Oberschenkelstütze (560; 570), ein Polster (60; 160; 260; 360) oder eine Armlehne (600) ist.

13. Umklappbarer Sitz nach einem der Ansprüche 1-12, wobei die ergonomische Stütze aus mindestens zwei Polstern (60; 160; 260; 360) besteht.

14. Umklappbarer Sitz nach Anspruch 13, wobei sich die mindestens zwei Polster (160) an einer Erweiterung um mindestens ein vertikales Element (124) des Sitzlehnenrahmens (110) drehen.

15. Umklappbarer Sitz nach Anspruch 13 oder 14, ferner umfassend eine wölbbare Druckfläche (370) zusätzlich zu den mindestens zwei Polstern (360).

16. Umklappbarer Sitz nach einem der Ansprüche 13-15, ferner umfassend seitliche Drähte (182), welche an jedem der mindestens zwei Polster (160) angebracht sind.

17. Umklappbarer Sitz nach Anspruch 16, wobei sich die seitlichen Drähte (182) funktionsfähig mit einer flexiblen Drahtanordnung (120) derart in Eingriff befinden, dass aufgrund der Erweiterung der Polster (160) ein Abschnitt der flexiblen Drahtanordnung (120) erweitert wird.

18. Umklappbarer Sitz nach einem der Ansprüche 1-17, ferner umfassend eine flexible Drahtanordnung (20; 120), welche an dem Sitzlehnenrahmen (10; 110) anbringbar ist.

19. Umklappbarer Sitz nach Anspruch 16 und 18, wobei die flexible Drahtanordnung (20; 120) zwischen den seitlichen Drähten (182) und einem Sitzinsassen angeordnet ist.

20. Umklappbarer Sitz nach Anspruch 18 oder 19, wobei ein Abschnitt der flexiblen Drahtanordnung (20; 120) im Wesentlichen dem Lendenwirbelbereich eines Sitzinsassen entspricht.

21. Umklappbarer Sitz nach einem der Ansprüche 1-20, wobei die ergonomische Stütze eine wölbbare Druckfläche (370) ist.

22. Umklappbarer Sitz nach einem der Ansprüche 1-21, wobei die ergonomische Stütze eine Scherenlordosenstütze (460, 470) ist.

23. Umklappbarer Sitz nach einem der Ansprüche 1-22, ferner umfassend eine Oberschenkelstütze, wobei die Oberschenkelstütze ein vorderes Oberschenkelpolster (570) oder ein Seitenoberschenkelpolster (560) ist.

24. Umklappbarer Sitz nach Anspruch 23, wobei sich das vordere Oberschenkelpolster (560) aufgrund einer Erweiterung um ein vorderes Element des Sitzflächenrahmens (505) dreht.

25. Umklappbarer Sitz nach einem der Ansprüche 1-24, wobei sich mindestens zwei Seitenoberschenkelpolster (560) an einer Erweiterung um zwei Seitenelemente des Sitzflächenrahmens (505) drehen.

26. Umklappbarer Sitz nach einem der Ansprüche 1-25, wobei die ergonomische Stützvorrichtung (20; 60; 460) eine im Wesentlichen feste Drahtanordnung ist.

27. Umklappbarer Sitz nach einem der Ansprüche 1-26, wobei die ergonomische Stützvorrichtung ausgewählt ist aus der Gruppe bestehend aus: einer Schiebeplatte, einer Schere (460, 470), einer wölbenden Druckfläche (370) oder einem konkaven Gurt.

28. Umklappbarer Sitz nach einem der Ansprüche 1-27, wobei die ergonomische Stütze mindestens eine Armlehne (600) ist.

29. Umklappbarer Sitz nach einem der Ansprüche 1-28, wobei die ergonomische Stütze (20; 60; 460) mit einer benutzerveränderlichen Lordosenstütze kombiniert ist.

30. Umklappbarer Sitz nach einem der Ansprüche 1-29, ferner umfassend eine Armlehne (600), welche gelenkig an dem Sitzlehnenrahmen (610) angebracht ist und sich funktionsfähig mit einem zweiten Zugkabel (102) in Eingriff befindet, welches angeordnet ist, die Armlehne (600) automatisch zu erweitern, sobald der Sitzlehnenrahmen (610) geöffnet wird.

31. Umklappbarer Sitz nach einem der vorhergehenden Ansprüche, ferner umfassend einen horizontalen Verstärkungsstab (190).

32. Verfahren zum Betätigen einer ergonomischen Stütze in einem umklappbaren Sitz, umfassend:
Anbringen einer ergonomischen Stütze (20; 60; 460) an einem von einem Sitzlehnenrahmen (10; 110) oder einem Sitzflächenrahmen (205), wobei die ergonomische Stütze (20; 60; 460) eine abgeflachte Position und eine ausgedehnte Position mit einer größeren Raumtiefe als die abgeflachte Position umfasst, wobei die abgeflachte Position und die ausgedehnte Position jeweils mit einer umgeklappten Position und einer nicht umgeklappten Position des Sitzes übereinstimmen;
in Eingriff bringen der ergonomischen Stütze (20; 60; 460) mit einem ersten Ende (36; 136) einer Zugkabelhülle (32; 132) und einem ersten Ende (38) eines Zugkabeldrahts (34; 134);
Anbringen eines zweiten Endes (52) der Zugkabelhülle (32; 132) an einem von dem Sitzflächenrahmen (205) oder dem Sitzlehnenrahmen (10; 110);
Anbringen eines zweiten Endes (74) des Zugkabeldrahts (34; 134) an dem anderen von dem Sitzflächenrahmen (205) oder dem Sitzlehnenrahmen (10; 110); und
Bewegen des Sitzes zwischen der umgeklappten Position und der nicht umgeklappten Position.

## Revendications

1. Siège rabattable, comprenant :
un cadre de fond de siège (205) mis en prise de manière opérationnelle avec un cadre de dossier de siège (10, 110), ledit cadre de fond de siège (205) et ledit cadre de dossier de siège (10, 110) étant mobiles entre une position repliée et une position ouverte ;
un support ergonomique à actionnement automatique (20, 60, 460), ledit support ergonomique (20, 60, 460) étant monté sur l'un parmi ledit cadre de fond de siège (205) ou ledit cadre de dossier de siège (10, 110) et au moins un câble de traction (30, 130, 230, 330, 430) ayant un manchon (32, 132) et un fil (34, 134), disposé de façon à coulisser axialement à travers ledit manchon (32, 132), une première extrémité de manchon (36, 136) et une première extrémité de fil (38) étant opérationnellement mises en prise avec ledit support ergonomique (20, 60, 460), une seconde extrémité de manchon (52) étant opérationnellement mise en prise avec un parmi ledit cadre de fond de siège (205) ou ledit cadre de dossier de siège (10, 110) et une seconde extrémité de fil (74) étant opérationnellement mise en prise avec l'autre parmi ledit cadre de fond de siège (205) ou ledit cadre de dossier de siège (10, 110),
**caractérisé en ce que**
ledit support ergonomique (20, 60, 460) a une position aplatie et au moins une position étendue, dans lequel ladite position aplatie correspond à la position repliée du siège et ladite position étendue correspond à la position ouverte du siège, et dans lequel ledit support ergonomique, dans la position étendue, a une profondeur d'espace supérieure à celle dans ladite position aplatie, moyennant quoi le mouvement dudit cadre de dossier de siège (10, 110) ou dudit cadre de fond de siège (205) depuis ladite position repliée, applique une traction audit au moins un câble de traction (30, 130, 230, 330, 430), de sorte que ledit au moins un câble de traction (30, 130, 230, 330, 430) déplace ledit support ergonomique (20, 60, 460) depuis ladite position aplatie ; et
ladite seconde extrémité de manchon (52) est montée directement sur l'un parmi ledit cadre de fond de siège (205) ou ledit cadre de dossier de siège (10, 110) et ladite seconde extrémité de fil (74) est montée directement sur l'autre parmi ledit cadre de fond de siège (205) ou ledit cadre de dossier de siège (10, 110).

2. Siège rabattable selon la revendication 1, comprenant en outre un actionneur mis en prise de manière opérationnelle avec une partie fixe d'un élément parmi ledit cadre de dossier de siège (10, 110) ou ledit cadre de fond de siège (205) et mis en prise de manière opérationnelle avec une partie mobile de l'autre parmi ledit cadre de dossier de siège (10, 110) ou ledit cadre de fond de siège (205), de sorte que la levée dudit cadre de dossier de siège (10, 110) actionne ledit actionneur, afin d'actionner ledit au moins un câble de traction.

3. Siège rabattable selon la revendication 2, dans lequel ledit actionneur comprend en outre :
un élément fixe (50) ;
un élément rotatif (70) fixé audit cadre de dossier arrière (10, 110), ledit élément rotatif (70) étant opérationnellement mis en prise avec ledit élément fixe (50), de sorte que ledit élément rotatif (70) se déplace relativement audit élément fixe (50) quand ledit cadre de dossier de siège (10, 110) est replié vers le haut ;
ladite seconde extrémité de manchon (52) dudit câble de traction (30) étant fixée à l'un parmi ledit élément fixe (50) ou ledit élément rotatif (70) ;
ladite seconde extrémité de fil (74) dudit câble de traction (30) étant fixée à l'autre parmi ledit élément fixe (50) ou ledit élément rotatif (70) ;
lesdites fixations de ladite seconde extrémité de manchon (52) et ladite seconde extrémité de fil (74) appliquant une traction audit fil (34) à travers ledit manchon (32), quand ledit cadre de dossier de siège (10, 110) est déplacé.

4. Siège rabattable selon la revendication 3, dans lequel ladite fixation de ladite seconde extrémité de fil (74) à l'autre parmi ledit élément fixe (50) ou ledit élément rotatif (70) s'effectue par le biais d'une poulie (70).

5. Siège rabattable selon la revendication 3 ou 4, dans lequel ledit élément rotatif est une unité de tension de câble (50) et ledit élément fixe est une tige de torsion (14).

6. Siège rabattable selon la revendication 3 ou 4, dans lequel ledit élément fixe est une unité de tension de câble et ledit élément rotatif est une tige de torsion.

7. Siège rabattable selon l'une quelconque des revendications 3-6, dans lequel ledit élément rotatif est un cadre dudit dossier de siège.

8. Siège rabattable selon l'une quelconque des revendications 3-7, dans lequel ledit élément fixe est un cadre du fond dudit siège.

9. Siège rabattable selon l'une quelconque des revendications 1-8, dans lequel ladite seconde extrémité de manchon (52) est fixée à un logement de poulie (50), ledit logement de poulie (50) étant adapté pour mettre en prise un parmi ledit cadre de fond de siège (205) ou ledit cadre de dossier de siège (10, 110) et ladite seconde extrémité de fil (74) est fixée à une poulie (70), ladite poulie (70) étant opérationnellement montée dans ledit logement de poulie (50) et ladite poulie (70) étant adaptée pour mettre en prise l'autre parmi ledit cadre de fond de siège (205) ou ledit cadre de dossier de siège (10, 210), moyennant quoi le mouvement dudit cadre de dossier de siège (10, 210), depuis ladite position repliée, applique une traction audit câble de traction (30), de sorte que ledit câble de traction (30) déplace ledit support ergonomique (20, 60, 460) de ladite position aplatie.

10. Siège rabattable selon l'une quelconque des revendications 1-9, comprenant en outre :
une base de fond de siège (220) ;
au moins un élément de support (90) en liaison par élévation avec ladite base de fond de siège (220) et ledit cadre de fond de siège (205), ledit au moins un élément de support (90) assistant le parcours dudit cadre de fond de siège (205) entre une position repliée et une position élevée ;
ladite seconde extrémité de manchon (52) étant en prise avec un élément parmi ladite base de fond de siège (220) ou ledit cadre de fond de siège (205) et ladite seconde extrémité de fil (74) étant mise en prise avec l'autre parmi ladite base de fond de siège (220) ou ledit cadre de fond de siège (205) ;
moyennant quoi le mouvement du cadre de fond de siège (205) depuis ladite position repliée applique une traction audit câble de traction (30, 130, 230, 330, 430), de sorte que ledit câble de traction (30, 130, 230, 330, 430), déplace ledit support ergonomique (20, 60, 460) depuis ladite position aplatie.

11. Siège rabattable selon la revendication 10, dans lequel ledit élément de support (90) comprend au moins deux pattes pivotantes, chacune desdites pattes étant raccordée en articulation à chacun desdits éléments parmi la base de fond de siège (220) et ledit cadre de fond de siège (205).

12. Siège rabattable selon l'une quelconque des revendications 1-11, dans lequel ledit support ergonomique est n'importe lequel parmi un support lombaire (30, 370, 470), un support de jambe (560, 570), une traverse (60, 160, 260, 360) et un accoudoir (600).

13. Siège rabattable selon l'une quelconque des revendications 1-12, dans lequel ledit support ergonomique comprend au moins deux traverses (60, 160, 260, 360).

14. Siège rabattable selon la revendication 13, dans lequel lesdits au moins deux traverses (160) pivotent lors de l'extension autour d'au moins un élément vertical (124) dudit cadre de dossier de siège (110).

15. Siège rabattable selon les revendications 13 ou 14, comprenant en outre une surface de pression incurvable(370), en plus desdits au moins deux traverses (360).

16. Siège rabattable selon l'une quelconque des revendications 13-15 comprenant en outre des fils latéraux (182) fixés à chacune desdites au moins deux traverses (160).

17. Siège rabattable selon la revendication 16, dans lequel lesdits fils latéraux (182) sont opérationnellement mis en prise avec une rangée de fils flexibles (120), de sorte que lors de l'extension desdites traverses (160), une partie de ladite série de fils flexibles (120) soit étendue.

18. Siège rabattable selon l'une quelconque des revendications 1-17, comprenant en outre une rangée de fils flexibles (20, 120) pouvant être montés sur ledit cadre de dossier de siège (10, 110).

19. Siège rabattable selon les revendications 16 et 18, dans lequel ladite rangée de fils flexibles (20, 120) est disposée entre lesdits fils latéraux (182) et un occupant du siège.

20. Siège rabattable selon les revendications 18 ou 19, dans lequel une partie de ladite rangée de fils flexibles (20, 120) correspond sensiblement à la colonne vertébrale d'un occupant du siège.

21. Siège rabattable selon l'une quelconque des revendications 1-20, dans lequel ledit support ergonomique est une surface de pression pouvant être incurvée (370).

22. Siège rabattable selon l'une quelconque des revendications 1-21, dans lequel ledit support ergonomique est un support lombaire en ciseaux (460, 470).

23. Siège rabattable selon l'une quelconque des revendications 1-22, comprenant en outre un support de jambe, ledit support de jambe étant l'un quelconque parmi une traverse de jambe avant (570) et une traverse de jambe latérale (560).

24. Siège rabattable selon la revendication 23, dans lequel ladite traverse de jambe avant (560) pivote lors de l'extension autour d'un élément avant dudit cadre de fond de siège (505).

25. Siège rabattable selon l'une quelconque des revendications 1-24, dans lequel au moins deux traverses de jambe latérales (560) pivotent lors de l'extension autour de deux éléments latéraux dudit cadre de fond de siège (505).

26. Siège rabattable selon l'une quelconque des revendications 1-25, dans lequel ledit dispositif de support ergonomique (20, 60, 460) est une série de fils sensiblement rigides.

27. Siège rabattable selon l'une quelconque des revendications 1-26, dans lequel ledit dispositif de support ergonomique est choisi dans le groupe constitué de : une pale de poussée, des ciseaux (460, 470), une surface de pression incurvable (370) ou une bande concave.

28. Siège rabattable selon l'une quelconque des revendications 1-27, dans lequel ledit support ergonomique est au moins un accoudoir (600).

29. Siège rabattable selon l'une quelconque des revendications 1-28, dans lequel ledit support ergonomique (20, 60, 460) est combiné avec un support lombaire variable selon l'utilisateur.

30. Siège rabattable selon l'une quelconque des revendications 1-29, comprenant en outre un accoudoir (600) fixé en articulation audit cadre de dossier de siège (610) et opérationnellement mis en prise avec un second câble de traction (102), disposé de façon à étendre automatiquement ledit accoudoir (600) sur ledit cadre de dossier de siège (610) ouvert.

31. Siège rabattable selon l'une quelconque des revendications précédentes comprenant en outre une tige de support horizontale (190).

32. Procédé d'actionnement d'un support ergonomique dans un siège rabattable comprenant :
le montage d'un support ergonomique (20, 60, 460) sur un élément parmi un cadre de dossier de siège (10, 110) ou un cadre de fond de siège (205), dans lequel ledit support ergonomique (20, 60, 460) comprend une position aplatie et une position étendue, ayant une profondeur d'espace supérieure à ladite position aplatie, ladite position aplatie et ladite position étendue correspondant respectivement à une position repliée et à une position dépliée dudit siège ;
la mise en prise dudit support ergonomique (20, 60, 460) avec une première extrémité (36, 136) d'un manchon de câble de traction (32, 132) et une première extrémité (38) d'un fil de câble de traction (34, 134) ;
la fixation d'une seconde extrémité (52) dudit manchon de câble de traction (32, 132) à un parmi ledit cadre de fond de siège (205) ou ledit cadre de dossier de siège (10, 110) ;
la fixation d'une seconde extrémité (74) dudit fil de câble de traction (34, 134) à l'autre parmi ledit cadre de fond de siège (205) ou ledit cadre de dossier de siège (10, 110) ; et
le déplacement dudit siège entre ladite position repliée et ladite position non repliée.
